(19) Europäisches Patentamt
European Patent Office
Office européen des brevets

(11) **EP 4 379 359 A1**

(12) **EUROPEAN PATENT APPLICATION**
published in accordance with Art. 153(4) EPC

(43) Date of publication:
**05.06.2024 Bulletin 2024/23**

(21) Application number: **22861033.3**

(22) Date of filing: **25.07.2022**

(51) International Patent Classification (IPC):
**G01N 21/64** *(2006.01)*    **G01N 21/27** *(2006.01)*
**G06T 7/00** *(2017.01)*

(52) Cooperative Patent Classification (CPC):
**G01N 21/27; G01N 21/64; G06T 7/00**

(86) International application number:
**PCT/JP2022/028660**

(87) International publication number:
**WO 2023/026742 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.08.2021   JP 2021137177**

(71) Applicant: **Hamamatsu Photonics K.K.
Hamamatsu-shi, Shizuoka 435-8558 (JP)**

(72) Inventors:
• **HIGUCHI, Takafumi
Hamamatsu-shi, Shizuoka 435-8558 (JP)**
• **IKEMURA, Kenichiro
Hamamatsu-shi, Shizuoka 435-8558 (JP)**

(74) Representative: **Hoffmann Eitle
Patent- und Rechtsanwälte PartmbB
Arabellastraße 30
81925 München (DE)**

(54) **DYE IMAGE ACQUISITION METHOD, DYE IMAGE ACQUISITION DEVICE, AND DYE IMAGE ACQUISITION PROGRAM**

(57) A dye image acquisition system 1 includes an image acquisition device 3 that irradiates a sample S with each of excitation light beams having C (C is an integer of 2 or more) wavelength distributions and acquires the C fluorescence images each including N (N is an integer of 2 or more) pixels; and an image processing device 5 that generates a dye image, in which the image processing device 5 clusters the N pixels into L (L is an integer of 2 or more and N-1 or less) pixel groups based on fluorescence intensities of respective pixels of the C fluorescence images, generates L cluster matrices in which the C fluorescence images are arranged for each of the clustered pixel groups, calculates statistical values of the fluorescence intensities of the pixel groups configuring the C fluorescence images for each of the L cluster matrices, and performs unmixing on the C fluorescence images by using the statistical values of the C fluorescence images for each of the L cluster matrices, and generates K (K is an integer of 2 or more and C or less) dye images indicating a distribution for each K dyes.

*Fig.1*

**Description**

**Technical Field**

One aspect of an embodiment relates to a dye image acquisition method, a dye image acquisition device, and a dye image acquisition program.

**Background Art**

Conventionally, a multiple identification method of simultaneously staining a plurality of substances in a sample for a sample such as a biological tissue has been used. Then, in order to observe a substance in a sample subjected to multiple identification, a fluorescence image is also acquired by irradiating the sample with excitation light. For example, Non Patent Literature 1 below discloses application of a nonnegative matrix factorization (NMF) method in order to obtain a separated image for each substance in a sample by performing blind unmixing of fluorescence images obtained by observing fluorescence in a plurality of wavelength ranges. In addition, Non Patent Literature 2 below discloses, as a method of unmixing fluorescence images, clustering fluorescence images, extracting a maximum value of fluorescence intensity in each clustered pixel group, and generating a separated image based on the maximum value.

**Citation List**

**Non Patent Literature**

Non Patent Literature 1: Binjie Qin et al., "Target/Background Classification Regularized Nonnegative Matrix Factorization for Fluorescence Unmixing", IEEE TRANSACTIONS ON INSTRUMENTATION AND MEASUREMENT, VOL. 65, NO. 4, APRIL 2016
Non Patent Literature 2: Tristan D. McRae et al., "Robust blind spectral unmixing for fluorescence microscopy using unsupervised learning", PLOS ONE, December 2, 2019

**Summary of Invention**

**Technical Problem**

In the conventional method as described above, in order to increase an accuracy of the separated image acquired by unmixing, it is necessary to increase the type of excitation light, the number of fluorescence bands to be observed, or the number of images. Therefore, a calculation time of unmixing tends to increase, leading to a decrease in throughput.

Therefore, one aspect of the embodiment has been made in view of such a problem, and an object thereof is to provide a dye image acquisition method, a dye image acquisition device, and a dye image acquisition program capable of improving throughput while improving an accuracy of a separated image acquired by unmixing.

**Solution to Problem**

A dye image acquisition method according to a first aspect of the embodiment includes: an image acquisition step of irradiating a sample with each of excitation light beams having C (C is an integer of 2 or more) wavelength distributions and acquiring the C fluorescence images each including N (N is an integer of 2 or more) pixels; a clustering step of clustering the N pixels into L (L is an integer of 2 or more and N-1 or less) pixel groups based on intensity values of respective pixels of the C fluorescence images, and generating L cluster matrices in which the C fluorescence images are arranged for each of the clustered pixel groups; a calculation step of calculating statistical values of the intensity values of the pixel groups configuring the C fluorescence images for each of the L cluster matrices; and an image generation step of performing unmixing on the C fluorescence images by using the statistical values of the C fluorescence images for each of the L cluster matrices, and generating K (K is an integer of 2 or more and C or less) dye images indicating a distribution for each K dyes.

Alternatively, a dye image acquisition device according to a second aspect of the embodiment includes: an image acquisition device that irradiates a sample with each of excitation light beams having C (C is an integer of 2 or more) wavelength distributions and acquires the C fluorescence images each including N (N is an integer of 2 or more) pixels; and an image processing device that generates a dye image indicating a distribution of dyes in the sample, in which the image processing device clusters the N pixels into L (L is an integer of 2 or more and N-1 or less) pixel groups based on intensity values of respective pixels of the C fluorescence images, and generates L cluster matrices in which the C fluorescence images are arranged for each of the clustered pixel groups, calculates statistical values of the intensity values of the pixel groups configuring the C fluorescence images for each of the L cluster matrices, and performs unmixing on the C fluorescence images by using the statistical values of the C fluorescence images for each of the L cluster matrices, and generates K (K is an integer of 2 or more and C or less) dye images indicating a distribution for each K dyes.

Alternatively, a dye image acquisition program according to a third aspect of the embodiment is a dye image acquisition program for generating a dye image indicating a distribution of dyes in a sample based on C (C is an integer of 2 or more) fluorescence images acquired by irradiating the sample with each of excitation light beams having C wavelength distributions, the C fluorescence images including N (N is an integer of 2 or more) pixels, the program for causing a computer to function as: a clustering unit that clusters the N pixels into L (L is an integer of 2 or more and N-1 or less) pixel groups based on intensity values of respective pixels of the C fluorescence images, and generates L cluster matrices in which the C fluorescence images are arranged for each of the clustered pixel groups; a calculation unit that calculates statistical values of the intensity values of the pixel groups configuring the C fluorescence images for each of the L cluster matrices; and an image generation unit that performs unmixing on the C fluorescence images by using the statistical values of the C fluorescence images for each of the L cluster matrices, and generates K (K is an integer of 2 or more and C or less) dye images indicating a distribution for each K dyes.

According to the first aspect, the second aspect, or the third aspect, C fluorescence images acquired by capturing fluorescence images of the sample by using excitation light beams of different wavelength distributions are acquired, N pixels of the C fluorescence images are clustered into L pixel groups based on the intensity value of each pixel, and L cluster matrices in which the C fluorescence images are arranged for each of the L pixel groups are generated. In addition, the statistical values of the intensity values of the pixel groups configuring the C fluorescence images are calculated for each of the L cluster matrices, and the C fluorescence images are unmixed by using the statistical values of the respective C fluorescence images to generate K dye images. As a result, even when the type of excitation light used for observation or the number of fluorescence bands to be observed increases, an amount of calculation when unmixing is performed can be suppressed. In addition, by performing unmixing by using the statistical values of the fluorescence images for each clustered cluster matrix, an accuracy of separation of the dye images can also be improved. As a result, it is possible to improve the throughput when acquiring the separated image while improving an accuracy of the separated image.

**Advantageous Effects of Invention**

According to one aspect of the embodiment, it is possible to improve throughput while improving an accuracy of a separated image acquired by unmixing.

**Brief Description of Drawings**

FIG. 1 is a schematic configuration diagram of a dye image acquisition system 1 according to an embodiment.
FIG. 2 is a perspective diagram illustrating a configuration of an image acquisition device 3 in FIG. 1.
FIG. 3 is a block diagram illustrating an example of a hardware configuration of an image processing device 5 in FIG. 1.
FIG. 4 is a block diagram illustrating a functional configuration of the image processing device 5 in FIG. 1.
FIG. 5 is a diagram illustrating an image of pixel groups clustered by a first clustering function by a clustering unit 203 in FIG. 4.
FIG. 6 is a graph illustrating wavelength characteristics of absorption rates of excitation light beams of a plurality of dyes included in a sample S.
FIG. 7 is a graph illustrating a distribution of centroid fluorescence wavelengths specified by the clustering unit 203 in FIG. 4.
FIG. 8 is a diagram illustrating an image of pixel groups clustered by a second clustering function by the clustering unit 203 in FIG. 4.
FIG. 9 is a diagram illustrating an image of matrix data Y' regenerated by a statistical value calculation unit 204 in FIG. 4 and dye matrix data X'.
FIG. 10 is a flowchart illustrating a procedure of a dye image acquisition method according to the embodiment.
FIG. 11 is a diagram illustrating an example of a dye image generated by the dye image acquisition system 1 according to the embodiment.

**Description of Embodiments**

Hereinafter, the embodiment of the present invention will be described in detail with reference to the accompanying drawings. Note that in the description, the same reference numerals will be used for the same elements or elements having the same functions, and redundant description will be omitted.

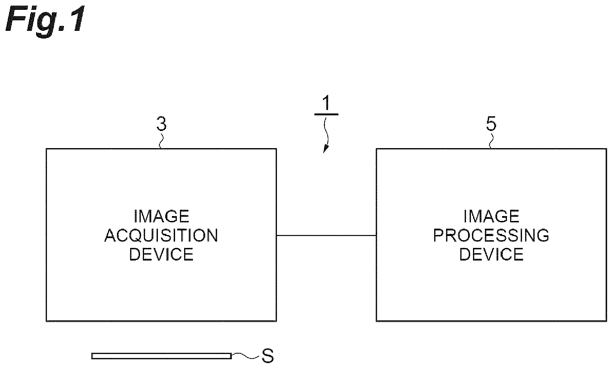

FIG. 1 is a schematic configuration diagram of a dye image acquisition system 1 that is a dye image acquisition device according to an embodiment. The dye image acquisition system 1 is a device for generating a dye image for specifying a distribution of dyes in a sample such as a biological tissue to be observed. The image generated by the dye image acquisition system 1 is used for the purpose of drug development, therapy study, and the like through analysis of the image. Therefore, the dye image acquisition system 1 is required to generate an image capable of quantitatively specifying the distribution of many substances (dyes) contained in the sample with high throughput. The dye image acquisition system 1 includes an image acquisition device 3 that irradiates a sample S with excitation light and acquires an image of fluorescence generated in response to the irradiation, and an image processing device 5 that performs data processing on the image acquired by the image acquisition device 3. The image acquisition device 3 and the image processing device 5 may be configured to be able to transmit and receive image data by using wired communication or wireless communication therebetween, or may be configured to be able to input and output image data via a recording medium.

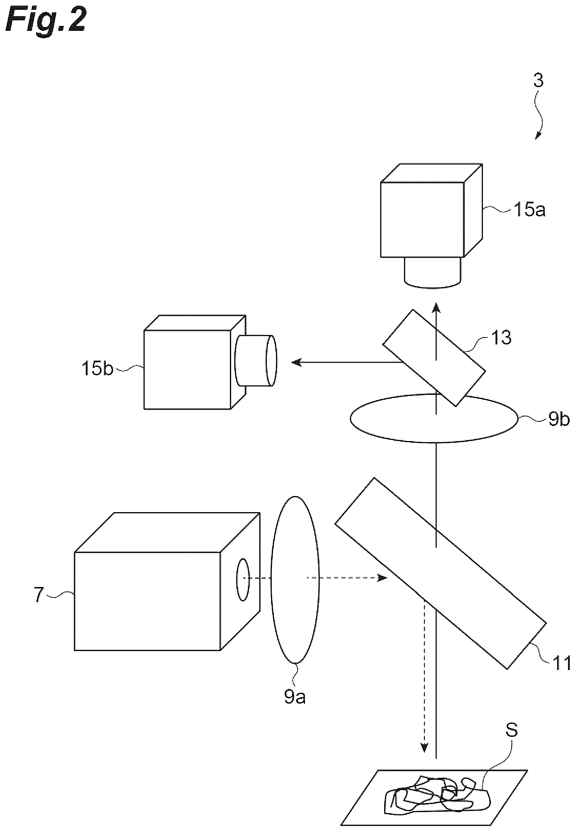

FIG. 2 is a perspective diagram illustrating a configuration of the image acquisition device 3 of FIG. 1. In FIG. 2, an optical path of the excitation light is indicated by a dotted line with an arrow, and an optical path of the fluorescence is indicated by a solid line with an arrow. The image acquisition device 3 includes an excitation light source 7, a light source-side filter set 9a, a dichroic mirror 11, a camera-side filter set 9b, a wavelength information acquisition optical system 13, a first camera 15a, and a second camera 15b.

The excitation light source 7 is a light source capable of emitting excitation light beams of a plurality of wavelength bands (wavelength distributions) by switching, and is, for example, a light emitting diode (LED) light source, a light source including a plurality of monochromatic laser light sources, or a light source combining a white light source and a wavelength selection optical element. The light source-side filter set 9a is a multiband pass filter provided on the optical path of excitation light of the excitation light source 7 and having a property of transmitting light beams of a plurality of predetermined wavelength bands. The transmission wavelength band of the light source-side filter set 9a is set according to a plurality of wavelength bands of excitation light that can be used. The dichroic mirror 11 is an optical member that is provided between the light source-side filter set 9a and the sample S and has a property of reflecting excitation light toward the sample S and transmitting fluorescence emitted from the sample S in response to the reflection. The camera-side filter set 9b is a multiband pass filter that is provided on the optical path of the fluorescence transmitted by the dichroic mirror 11 and has a property of transmitting light beams of a plurality of predetermined wavelength bands. The transmission wavelength band of the camera-side filter set 9b is set according to the wavelength band of fluorescence generated in a dye that can be included in the sample S to be observed.

The wavelength information acquisition optical system 13 is an optical system that is provided on the optical path of the fluorescence transmitted by the camera-side filter set 9b and acquires wavelength information of the fluorescence. That is, the wavelength information acquisition optical system 13 separates the fluorescence from the sample S into two optical paths with different wavelength characteristics. For example, as the wavelength information acquisition optical system 13, a dichroic mirror having a wavelength characteristic of transmittance in which the transmittance linearly increases as the wavelength increases is used. The wavelength information acquisition optical system 13 using such a dichroic mirror separates the fluorescence with different wavelength characteristics, reflects a part of the fluorescence with a wavelength characteristic in which the reflectance decreases as the wavelength increases, and transmits a part of the fluorescence with a wavelength characteristic in which the transmittance increases as the wavelength increases. The wavelength information acquisition optical system 13 is provided with a support mechanism (not illustrated) that detachably supports the wavelength information acquisition optical system 13 on the optical path of fluorescence from the camera-side filter set 9b.

The first camera 15a is an imaging device that images a two-dimensional image including N (N is an integer of 2 or more, for example, 2048 × 2048) pixels, and is a camera that images one component of fluorescence separated by the wavelength information acquisition optical system 13 to acquire one separated fluorescence image when the wavelength information acquisition optical system 13 is supported on the optical path of the fluorescence. In addition, when the wavelength information acquisition optical system 13 is separated from the optical path of the fluorescence, the first camera 15a images the fluorescence transmitted through the camera-side filter set 9b, and acquires a fluorescence image. The first camera 15a outputs the acquired separated fluorescence image or the fluorescence image to the image processing device 5 by using communication or via a recording medium. The second camera 15b is an imaging device that images a two-dimensional image including the same N pixels as the first camera 15a, and is a camera that images the other component of the fluorescence separated by the wavelength information acquisition optical system 13 and acquires the other separated fluorescence image when the wavelength information acquisition optical system 13 is supported on the optical path of the fluorescence. The second camera 15b outputs the acquired separated fluorescence image to the image processing device 5 by using communication or via a recording medium.

Note that the fluorescence image may be acquired by adding images by the image processing device 5 by using the one separated fluorescence image acquired by the first camera 15a and the other separated fluorescence image acquired by the second camera 15b. In that case, the support mechanism in the wavelength information acquisition optical system 13 may be excluded.

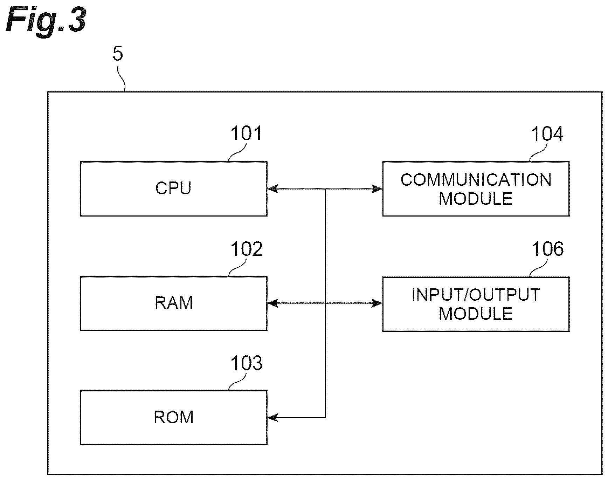

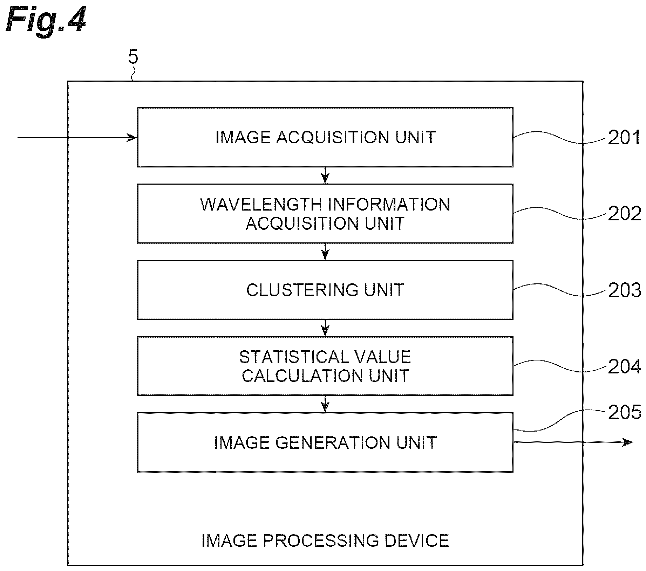

Next, a configuration of the image processing device 5 will be described with reference to FIGS. 3 and 4. FIG. 3 is a block diagram illustrating an example of a hardware configuration of the image processing device 5, and FIG. 4 is a block diagram illustrating a functional configuration of the image processing device 5.

As illustrated in FIG. 3, the image processing device 5 is physically a computer or the like including a central processing unit (CPU) 101 that is a processor, a random access memory (RAM) 102 or a read only memory (ROM) 103 that is a recording medium, a communication module 104, an input/output module 106, and the like, which are electrically coupled to each other. Note that the image processing device 5 may include, as input/output devices, a display, a keyboard, a mouse, a touch panel display, or the like, or may include a data recording device such as a hard disk drive or a semiconductor memory. Furthermore, the image processing device 5 may include a plurality of computers.

As illustrated in FIG. 4, the image processing device 5 includes an image acquisition unit 201, a wavelength information acquisition unit 202, a clustering unit 203, a statistical value calculation unit 204, and an image generation unit 205 as functional components. Each functional unit of the image processing device 5 illustrated in FIG. 4 is realized by operating the communication module 104, the input/output module 106, and the like and reading and writing data in the RAM 102 under the control of the CPU 101 by reading a program (dye image acquisition program according to the embodiment) on hardware such as the CPU 101 and the RAM 102. The CPU 101 of the image processing device 5 executes the computer program to cause each functional unit in FIG. 4 to function, and sequentially executes processing corresponding to a dye image acquisition method to be described later. Note that the CPU 101 may be a single piece of hardware or may be implemented in programmable logic such as an FPGA like a software processor. The RAM or the ROM may be a single piece of hardware or may be built in a programmable logic such as an FPGA. Various types of data necessary for execution of the computer program and various types of data generated by execution of the computer program are all stored in an internal memory such as the ROM 103 and the RAM 102 or a storage medium such as a hard disk drive. Hereinafter, functions of functional components of the image processing device 5 will be described in detail.

The image acquisition unit 201 acquires C (C is an integer of 2 or more) fluorescence images designated in advance for the sample S from the image acquisition device 3. These C fluorescence images are fluorescence images configured by N pixels generated by respectively irradiating the sample S with excitation light beams of the C wavelength bands and imaging fluorescence generated from the sample S in response to the irradiation in a state where the wavelength information acquisition optical system 13 is separated from the optical path of the fluorescence. At this time, the number C (the number C of wavelength bands of excitation light beams with which the sample S is irradiated) of fluorescence images to be acquired is specified in advance so as to be equal to or larger than a maximum number of dyes that can be included in the sample S. Note that a ratio of intensities of the excitation light beams when the image acquisition device 3 obtains the C fluorescence images is assumed to be the same, or the image acquisition unit 201 relatively corrects luminance values of the C fluorescence images so as to obtain fluorescence images in which the intensities of the excitation light beams are regarded to be equivalent.

In addition, the image acquisition unit 201 acquires C sets of separated fluorescence images designated in advance for the sample S from the image acquisition device 3. These C sets of separated fluorescence images are sets of separated fluorescence images configured by N pixels generated by irradiating the sample S with excitation light beams of C wavelength bands in a state where the wavelength information acquisition optical system 13 is supported on the optical path of the fluorescence, and separating the fluorescence generated from the sample S into two components in response to the irradiation and imaging the two components.

For each of the C sets of separated fluorescence images, the wavelength information acquisition unit 202 calculates the ratio between the fluorescence intensity (luminance value) of one separated fluorescence image and the fluorescence intensity of the other separated fluorescence image, thereby estimating a centroid fluorescence wavelength indicating a centroid of the wavelength distribution of the fluorescence. At this time, the wavelength information acquisition unit 202 calculates an average value of the fluorescence intensities of the one separated fluorescence image and an average value of the fluorescence intensities of the other separated fluorescence image for the pixel groups clustered by the clustering unit 203 described below, and calculates a ratio of these average values. The wavelength information acquisition unit 202 acquires the estimated centroid fluorescence wavelength as wavelength information related to a fluorescence wavelength.

The clustering unit 203 executes clustering on the N pixels configuring the C fluorescence images based on the C fluorescence images acquired by the image acquisition unit 201 and the wavelength information acquired by the wavelength information acquisition unit 202. Prior to the clustering processing, the clustering unit 203 generates matrix data Y in which fluorescence intensity values of the N pixels configuring each of the C fluorescence images are one-dimensionally arranged in parallel.

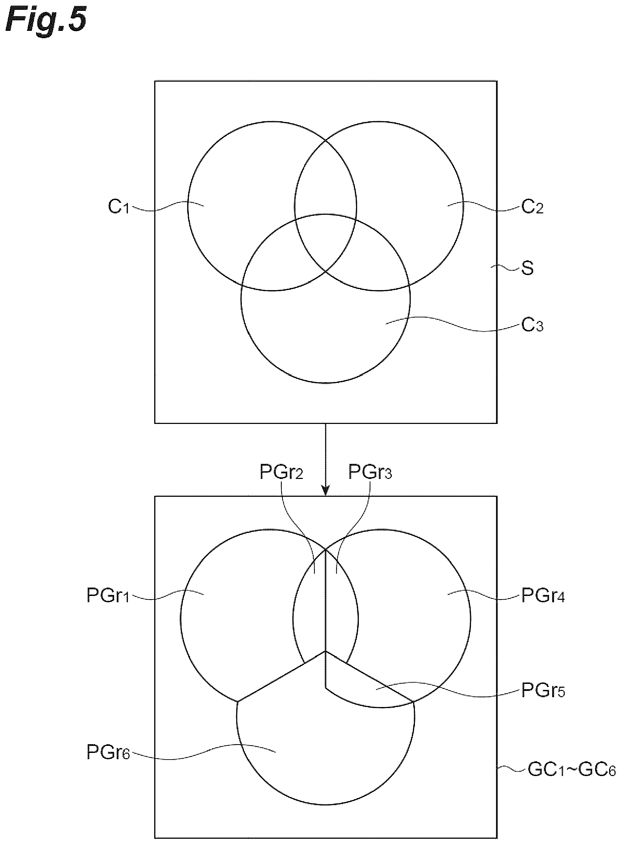

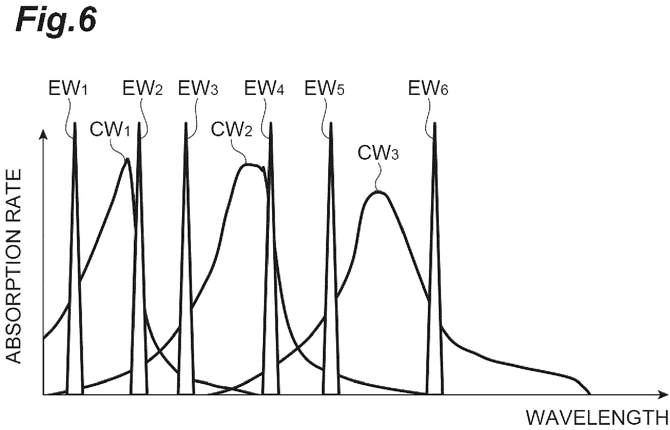

Next, the clustering unit 203 has a function (first clustering function) of clustering the N pixels into C pixel groups based on distribution information of fluorescence intensities for each excitation light of the C wavelength bands. Specifically, the clustering unit 203 clusters pixels having the same wavelength band of excitation light having a highest fluorescence intensity into the same pixel group. FIG. 5 illustrates an image of pixel groups clustered by the first clustering function by the clustering unit 203, and FIG. 6 illustrates wavelength characteristics of absorption rates of excitation light beams of a plurality of dyes included in the sample S. As illustrated in FIG. 5, assuming a case where there are three types of dyes including a dye C1, a dye $C_2$, and a dye $C_3$ in the sample S, and six fluorescence images are obtained by using excitation light beams of six types of wavelength bands, the clustering unit 203 clusters N pixels included in the six fluorescence images $GC_1$ to $GC_6$ into six pixel groups $PGr_1$ to $PGr_6$. As illustrated in FIG. 6, in general, different types of dyes have wavelength characteristics of different absorption rates, and the three types of dyes $C_1$, $C_2$, and $C_3$ also have wavelength characteristics $CWi$, $CW_2$, and $CW_3$ having different peak wavelengths. Therefore, in six types of wavelength bands $EW_1$, $EW_2$, $EW_3$, $EW_4$, $EW_5$, and $EW_6$ of the excitation light beams, a dye having a largest absorption rate is determined to be one of the three types of dyes $C_1$, $C_2$, and $C_3$. For example, the dye $C_1$ has the largest absorption rate of the excitation light of the wavelength band $EW_1$, the dye $C_1$ has the largest absorption rate of the excitation light of the wavelength band $EW_2$, and the dye $C_2$ has the largest absorption rate of the excitation light of the wavelength band $EW_3$. By using this property, the clustering unit 203 can cluster N pixels into a pixel group in a range in which the same dye is distributed by the first clustering function. However, the six pixel groups $PGr_1$ to $PGr_6$ clustered by the first clustering function do not correspond to the three types of dyes $C_1$, $C_2$, and $C_3$ on a one-to-one basis.

In addition, the clustering unit 203 has a function (second clustering function) of further clustering the C pixel groups clustered by the first clustering function into L (L is an integer of 2 or more and N-1 or less) pixel groups based on the wavelength information. Here, the number L of pixel groups to be clustered is set in advance as a parameter stored in the image processing device 5 in correspondence with the number of types of dyes that can exist in the sample S. That is, the clustering unit 203 specifies a centroid fluorescence wavelength estimated for the wavelength band of the excitation light corresponding to the pixel groups for each of the C pixel groups clustered by the first clustering function. More specifically, the clustering unit 203 acquires, from the wavelength information acquisition unit 202, wavelength information targeted for a pixel group clustered with a certain wavelength band having a largest absorption rate, and specifies a centroid fluorescence wavelength based on the acquired wavelength information. At this time, the wavelength information acquisition unit 202 acquires the wavelength information by using an average value of fluorescence intensities in the pixel groups of a set of separated fluorescence images obtained corresponding to the wavelength band. Further, the clustering unit 203 clusters the C pixel groups into L pixel groups by determining a distance (closeness of values) between centroid fluorescence wavelengths specified for each of the C pixel groups. Then, the clustering unit 203 regenerates the matrix data Y in which the fluorescence intensity values of the pixels of the C fluorescence images are one-dimensionally arranged in parallel by dividing into a cluster matrix for each of the L pixel groups.

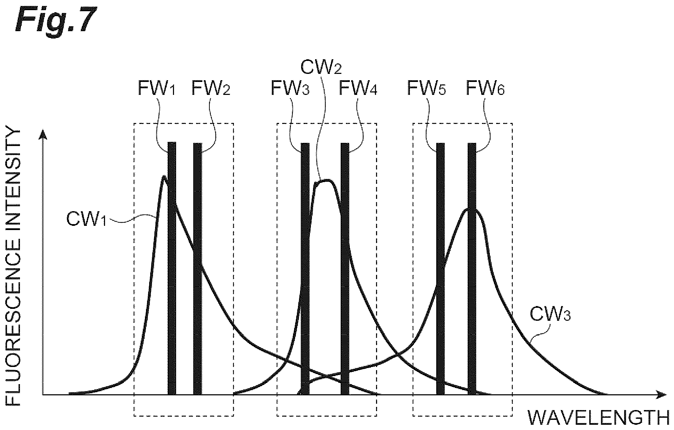

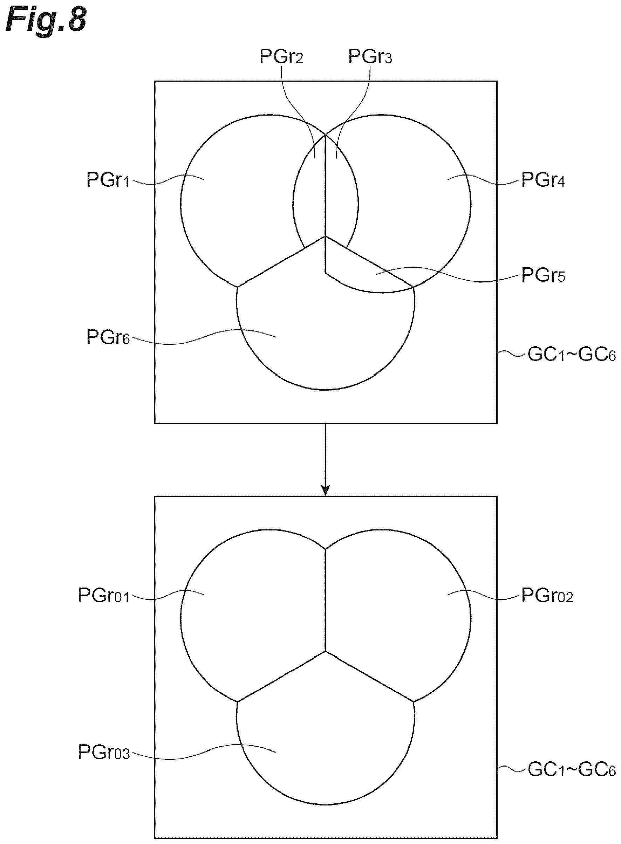

FIG. 7 illustrates a distribution of centroid fluorescence wavelengths specified by the clustering unit 203, and FIG. 8 illustrates an image of pixel groups clustered by the second clustering function by the clustering unit 203. In the example illustrated in FIGS. 7 and 8, centroid fluorescence wavelengths $FW_1$ to $FW_6$ are specified for each of the six pixel groups $PGr_1$ to $PGr_6$ clustered by the first clustering function, the pixel group $PGr_1$ and the pixel group $PGr_2$ in which the distances between the centroid fluorescence wavelengths close to each other are clustered into a new pixel group PGroi, similarly, the pixel group $PGr_3$ and the pixel group $PGr_4$ are clustered into a pixel group $PGr_{02}$, and the pixel group $PGr_5$ and the pixel group $PGr_6$ are clustered into a pixel group $PGr_{03}$. As a result, the pixels of the C fluorescence images can be divided into L pixel groups corresponding to the distribution of the pixels assumed to be included in the sample S. However, the division number L by the second clustering function is set to be equal to or less than the number C (the number C of wavelength bands of excitation light) of fluorescence images.

Based on L cluster matrices obtained for the sample S, the statistical value calculation unit 204 obtains a mixing matrix A for generating K dye images indicating the distribution of each of K (K is an integer of 2 or more and C or less) dyes from the C fluorescence images. In general, according to the calculation method of nonnegative matrix factorization (NMF), the relationship between the matrix data Y which is an observation value matrix and the dye matrix data X in which K dye images are arranged one-dimensionally in parallel for each pixel is expressed by the following formula by using the mixing matrix A;

$$Y = AX.$$

Here, Y is matrix data of C rows and N columns, A is matrix data of C rows and K columns, and X is matrix data of K rows and N columns. On the contrary, when the value of the mixing matrix A is obtained, the dye matrix data X can be derived by the following formula by using an inverse matrix $A^{-1}$ of the mixing matrix A and the matrix data Y (this processing is called unmixing);

$$X = A^{-1}Y.$$

Here, the statistical value calculation unit 204 regenerates matrix data Y' by compressing the matrix data Y generated by the clustering unit 203 in units of pixel groups clustered by the clustering unit 203. Specifically, the statistical value calculation unit 204 calculates a statistical value for each pixel group of the clustered cluster matrix for the fluorescence intensity of each row of the matrix data Y, and compresses the pixel group of each row into one pixel having the calculated statistical value. As a result, the statistical value calculation unit 204 regenerates the matrix data Y' which is matrix data of C rows and L columns. The statistical value calculation unit 204 may calculate, as the statistical value, an average value based on the integrated value of the fluorescence intensities, may calculate a mode of the fluorescence intensities, or may calculate an intermediate value of the fluorescence intensities.

Further, the statistical value calculation unit 204 derives the mixing matrix A based on the matrix data Y' by utilizing the property that the following formula including the mixing matrix A holds true in the regenerated matrix data Y' and the dye matrix data X' compressed in the same manner from the dye matrix data X;

$$Y' = AX'.$$

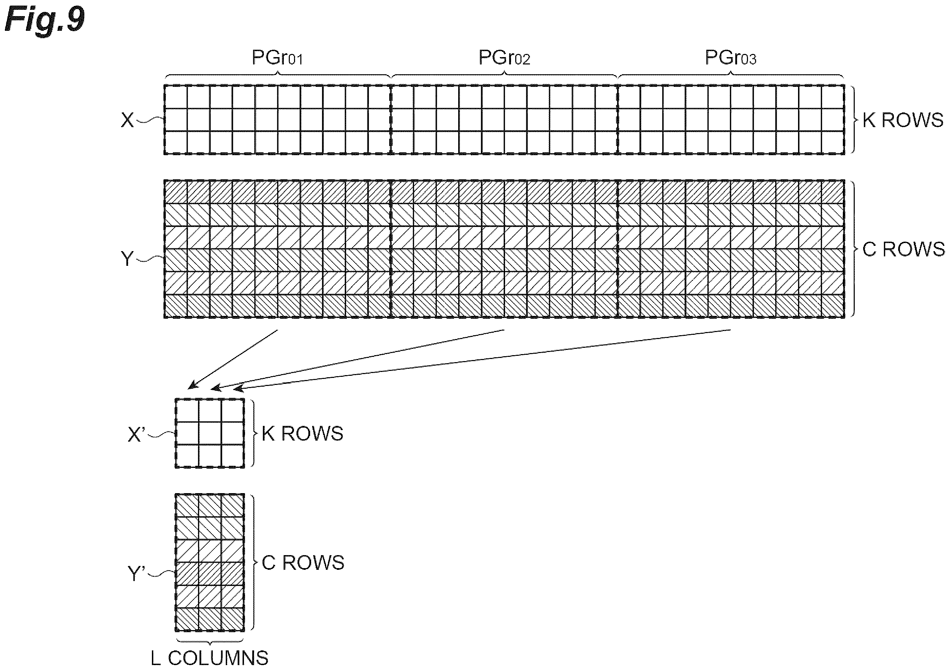

FIG. 9 illustrates an image of the matrix data Y' regenerated by the statistical value calculation unit 204 and the dye matrix data X' corresponding thereto. One grid illustrated in FIG. 9 represents one element of the matrix data. As described above, the dye matrix data X and the matrix data Y divided into the three pixel groups $PGr_{01}$ to $PGr_{03}$ are data compressed into the dye matrix data X' and the matrix data Y' of three columns with the statistical value for each of the pixel groups $PGr_{01}$ to $PGr_{03}$ as a representative value.

The statistical value calculation unit 204 derives the mixing matrix A based on the matrix data Y' as follows. That is, the statistical value calculation unit 204 sets an initial value to the mixing matrix A, calculates the following loss function (loss value) Los while sequentially changing the value of the mixing matrix A, and derives the mixing matrix A that reduces the value of the loss function Los. Note that a regularization term such as L 1 norm $\lambda \mid A \mid$ ($\lambda$ is a coefficient indicating a degree to which the regularization term is emphasized) may be added to the loss function.

[Mathematical formula 1]

$$Los = \sum_{j}^{C} \frac{1}{a}(Y' - AX')_{1j}^{2} + \sum_{j}^{C} \frac{1}{b}(Y' - AX')_{2j}^{2} + \sum_{j}^{C} \frac{1}{c}(Y' - AX')_{3j}^{2}$$

In the above formula, j is a parameter indicating a position (corresponding to the wavelength band of the excitation light) of a row of the matrix data, a subscript 1j of the matrix indicates matrix data of a j-th row of the first cluster matrix, a subscript 2j of the matrix indicates matrix data of a j-th row of the second cluster matrix, and a subscript 3j of the matrix indicates matrix data of a j-th row of the third cluster matrix. In addition, the parameters a, b, and c indicate the average values of the statistical values of the respective columns of the matrix data Y'.

As described above, the statistical value calculation unit 204 calculates the loss function with reference to the statistical values of the C pieces of matrix data Y' for each of the L cluster matrices divided by the clustering unit 203, calculates the loss function Los based on a sum of the L loss functions, and obtains the mixing matrix A based on the loss function Los. At this time, the statistical value calculation unit 204 corrects the loss function calculated for each of the L cluster matrices by dividing the loss function by the average values a, b, and c of the statistical values of the C pieces of matrix data Y', and then calculates a sum of the corrected loss functions to obtain the loss function Los. Note that the statistical value calculation unit 204 may calculate the loss function for each of the L cluster matrices by correcting the loss function by dividing the row component for each wavelength band of the excitation light having a difference value Y' - AX' by using the C statistical values corresponding to each wavelength band of the excitation light.

Note that the above formula can also be generalized as follows. That is, the statistical value calculation unit 204 derives the mixing matrix A and the dye matrix data X' based on the matrix data Y' as follows. That is, the statistical value calculation unit 204 sets initial values to the mixing matrix A and the dye matrix data X', calculates the loss function (loss value) Los by using the following formula while sequentially changing the values of the mixing matrix A and the dye matrix data X', and derives the mixing matrix A and the dye matrix data X' that reduce the value of the loss function Los. Note that a regularization term such as L1 norm $\lambda \mid A \mid$ ($\lambda$ is a coefficient indicating a degree to which the regularization term is emphasized) may be added to the loss function. Alternatively, the calculation may be performed with a constraint that the mixing matrix A and the dye matrix data X' have nonnegative values.

[Mathematical formula 2]

$$Los = \sum_i^L Los_i = \sum_i^L \sum_j^C w_{ij}(Y' - AX')_{ij}{}^2$$

In the above formula, j is a parameter indicating a position (corresponding to the wavelength band of the excitation light) of the row of the matrix data, and i is a parameter indicating a position (corresponding to an i-th cluster) of the column of the matrix data. Further, $w_{ij}$ represents a weight of each element of the matrix data, and may be calculated from the value of each element or its standard deviation. In addition, it is also possible to set all $w_{ij}$ to the same value and not consider the weight of each element. Note that a formula in which the average values of the statistical values of the respective columns of the matrix data Y' are set as a, b, c, ... in the above formula and is replaced with $w_{1j} = 1/a$, $w_{2j} = 1/b$, and $w_{3j} = 1/c$ is the same as the formula of the loss function Los described above.

As described above, the statistical value calculation unit 204 calculates the loss function with reference to the statistical values of the C pieces of matrix data Y' for each of the L cluster matrices divided by the clustering unit 203, calculates the loss function Los based on the sum of L loss functions $Los_i$, and obtains the mixing matrix A based on the loss function Los. Note that the statistical value calculation unit 204 may calculate the loss function $Los_i$ for each of the L cluster matrices by correcting the loss function $Los_i$ by dividing the row component for each wavelength band of the excitation light having a difference value Y' - AX' by using the C statistical values corresponding to each wavelength band of the excitation light.

The image generation unit 205 acquires K dye images by unmixing the C fluorescence images obtained for the sample S to be observed by using the mixing matrix A derived by the statistical value calculation unit 204. Specifically, the image generation unit 205 calculates the dye matrix data X by applying the inverse matrix $A^{-1}$ of the mixing matrix A to the matrix data Y generated by the clustering unit 203 based on the C fluorescence images. Then, the image generation unit 205 regenerates K dye images from the dye matrix data X, and outputs the regenerated K dye images. The output destination at this time may be an output device of the image processing device 5 such as a display or a touch panel display, or may be an external device coupled to the image processing device so as to be capable of data communication.

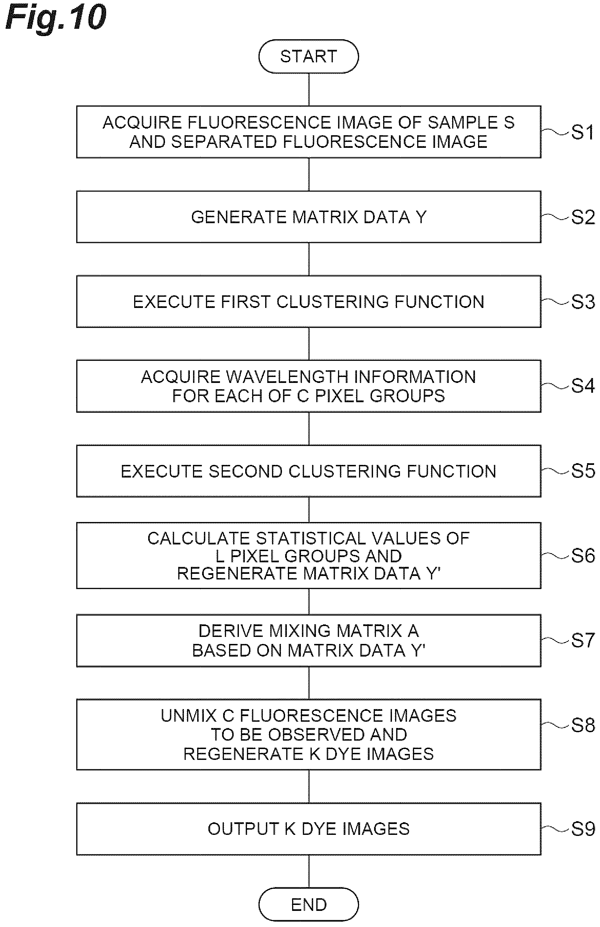

Next, a procedure of observation processing on the sample S using the dye image acquisition system 1 according to the present embodiment, that is, a flow of a dye image acquisition method according to the present embodiment will be described. FIG. 10 is a flowchart illustrating a procedure of observation processing by the dye image acquisition system 1.

First, the image acquisition unit 201 of the image processing device 5 acquires C fluorescence images obtained by imaging the sample S and C sets of separated fluorescence images (step S1; image acquisition step). Next, the clustering unit 203 of the image processing device 5 generates matrix data Y in which N pixels of the C fluorescence images are arranged in parallel (step S2).

Furthermore, a first clustering function is executed by the clustering unit 203 of the image processing device 5, and the N pixels of the fluorescence image are clustered into C pixel groups by using distribution information of fluorescence intensities for each excitation wavelength band (step S3; clustering step). Next, the wavelength information acquisition unit 202 of the image processing device 5 acquires wavelength information indicating a centroid fluorescence wavelength for each of the C pixel groups with reference to the set of separated fluorescence images (step S4; wavelength information acquisition step). Thereafter, a second clustering function is executed by the clustering unit 203 of the image processing device 5, and a distance between the centroid fluorescence wavelengths specified based on the wavelength information is determined for each of the C pixel groups, whereby the C pixel groups are clustered into L pixel groups (step S5; clustering step).

Next, the statistical value calculation unit 204 of the image processing device 5 calculates statistical values of the L pixel groups, thereby regenerating matrix data Y' based on matrix data Y generated by the clustering unit 203 (step S6; calculation step). Then, the statistical value calculation unit 204 of the image processing device 5 derives a mixing matrix A based on the matrix data Y' (step S7; image generation step). Furthermore, the image generation unit 205 of the image processing device 5 unmixes the matrix data Y generated based on the C fluorescence images for the sample S using the mixing matrix A, so that K dye images are regenerated (step S8; image generation step). Finally, the image generation unit 205 of the image processing device 5 outputs the regenerated K dye images (step S9). Thus, the observation processing for the sample S is completed.

According to the dye image acquisition system 1 described above, C fluorescence images acquired by capturing fluorescence images of the sample S by using excitation light beams of different wavelength bands are acquired, N pixels of the C fluorescence images are clustered into L pixel groups based on the fluorescence intensities of respective pixels, and L cluster matrices in which the C fluorescence images are arranged for each of the L pixel groups are generated. In addition, the statistical values of the fluorescence intensities of the pixel groups configuring the C fluorescence images are calculated for each of the L cluster matrices, and the C fluorescence images are unmixed by using the statistical values of the respective C fluorescence images to generate K dye images. As a result, even when the type of excitation light used for observation or the number of fluorescence bands to be observed increases, an amount of calculation when unmixing is performed can be suppressed. In addition, by performing unmixing by using the statistical values of the fluorescence images for each clustered cluster matrix, an accuracy of separation of the dye images can also be improved. As a result, it is possible to improve the throughput at the time of acquiring the dye image while improving the accuracy of the separated dye image.

Furthermore, in the present embodiment, in the clustering step, N pixels are clustered based on the distribution information of the fluorescence intensities for each of the C excitation light beams. As a result, the pixels can be clustered according to the fluorescence intensities for each of the excitation light beams, and by performing unmixing based on the clustering result, the accuracy of separation of the dye image can be improved.

Furthermore, in the present embodiment, a wavelength information acquisition step of acquiring wavelength information related to a fluorescence wavelength is further executed for each pixel group clustered by the first clustering function, and in the clustering step, C pixel groups are further clustered into L pixel groups based on wavelength information corresponding to each pixel group. As a result, the pixels can be clustered by using the fluorescence wavelength corresponding to each pixel group of the fluorescence image, and by unmixing the fluorescence image by using the clustering result, the accuracy of separation of the dye image for each dye that may exist in the sample S can be improved.

In addition, in the present embodiment, the fluorescence from the sample S generated by using the excitation light of any of wavelength band of the C wavelength bands is separated into two components via the wavelength information acquisition optical system 13, a set of separated fluorescence images obtained by respectively imaging the fluorescence of the separated two components is acquired, and the wavelength information is acquired based on the set of separated fluorescence images. In this case, the fluorescence from the sample S generated by the irradiation of the excitation light is separated with different wavelength characteristics, and the wavelength information is acquired based on the set of separated fluorescence images obtained by imaging the separated fluorescence, so that the wavelength information can be analyzed with a high accuracy. As a result, the accuracy of separation of the dye image can be improved.

In a conventional fluorescence imaging method for a sample containing a plurality of dyes, excitation light beams of a plurality of wavelength bands are sequentially emitted while switching a plurality of excitation light filters (band pass filters) each having a plurality of transmission wavelength bands provided in a light source, and fluorescence generated from the sample is imaged via the fluorescence filters while switching a plurality of fluorescence filters (band pass filters) each having a plurality of transmission wavelength bands in response to the irradiation, whereby a plurality of fluorescence images are acquired. Therefore, switching of the excitation light filter and switching of the fluorescence filter according to the switching of the excitation light filter are required. As a result, a time for switching the filter and a time for adjusting the position of the stage of the sample S for adjusting the irradiation range of the excitation light of the sample S according to the switching of the filter are required, and thus an acquisition time of the fluorescence image tends to be long. On the other hand, in the present embodiment, the multiband pass filter is used as the light source-side filter set 9a and the camera-side filter set 9b, switching of the filter is unnecessary, and the excitation light source 7 can also switch the wavelength band of the excitation light in the same field of view, so that the acquisition time of the fluorescence image can be greatly shortened. Note that, in the present embodiment, by imaging a fluorescence image by using a multiband filter, fluorescences of a plurality of fluorescence bands are mixed and reflected on each fluorescence image, but by performing unmixing processing, it is possible to perform separation into K dye images with a high accuracy.

Furthermore, in the calculation step of the present embodiment, the statistical value calculated when the cluster matrix is compressed is calculated based on the integrated value, the mode, or the intermediate value of the fluorescence intensities of the pixel groups. In this case, the unmixing can be executed based on the overall tendency of the fluorescence intensities of the L pixel groups of the fluorescence images in the cluster matrix, and the accuracy of the generated dye image can be improved.

Furthermore, in the image generation step of the present embodiment, the mixing matrix A is obtained by using the statistical values of the C fluorescence images for each of the L cluster matrices, and the C fluorescence images are unmixed by using the mixing matrix A. In this way, the mixing matrix A is obtained based on the statistical values of the L pixel groups of the clustered fluorescence image, the unmixing can be executed by using the mixing matrix A, and the accuracy of the generated dye image can be improved. Conventionally, derivation of the mixing matrix A has been performed by calculating the mixing matrix A based on reference information (fluorescence spectrum, absorption spectrum, or the like) of each dye. In the present embodiment, even when such reference information is unknown, the mixing matrix A can be estimated from the matrix data Y obtained from the fluorescence image.

Furthermore, in the image generation step of the present embodiment, the loss function is calculated based on the statistical values of the C fluorescence images for each of the L cluster matrices by using the NMF calculation method, and the mixing matrix A is obtained based on the loss function Los that is the sum of the loss functions for each of the L cluster matrices. In this way, the loss functions are calculated based on the statistical values of the L pixel groups of the clustered fluorescence image, the mixing matrix A is obtained based on the sum of these loss functions, and the unmixing can be executed by using the mixing matrix A. As a result, even when there is a difference in the size of the distribution region of each dye in the fluorescence image of the sample S, the accuracy of the generated dye image can be further improved. That is, in a case where the loss function is calculated for the fluorescence image without clustering, the separation accuracy of the relatively large dye in the distribution region is emphasized, and as a result, the separation accuracy of the relatively small dye in the distribution region decreases. However, in the present embodiment, the separation accuracy of a plurality of dyes can be uniformly improved.

Furthermore, in the image generation step of the present embodiment, the loss functions for each of the L cluster matrices may be corrected by being divided by the coefficients a, b, and c based on the statistical values of the cluster matrices, and the mixing matrix A may be obtained based on the sum of the corrected loss functions. According to such a configuration, the loss functions are calculated based on the statistical values of the L pixel groups of the clustered fluorescence image, and respective loss functions are corrected based on the statistical values when the sum of the loss functions is obtained. As a result, even when there is a difference in the fluorescence intensity of each dye in the fluorescence image of the sample S, the dye image can be generated with a high accuracy. That is, in a case where the loss function Los is calculated without correcting the L loss function, the separation accuracy of a dye having a relatively large fluorescence intensity is emphasized, and as a result, the separation accuracy of a dye having a relatively small fluorescence intensity decreases. However, in the present embodiment, the separation accuracy of the plurality of dyes can be uniformly improved.

In addition, in the present embodiment, by performing clustering and unmixing using the matrix data Y' based on statistical values, the calculation time for generating the dye image can be significantly shortened. For example, in a case where a fluorescence image including 660 image tiles each of which has 2048 × 2048 size is set as a processing target and the band number C of the excitation light is set to "10", the calculation time is about 17,000 seconds in a case where unmixing is performed by using the matrix data Y as it is without performing clustering. On the other hand, according to the method of the present embodiment, the number of processed data is greatly reduced, so that the calculation time in a case where the number L of clustering is set to "6" is greatly reduced to about 0.06 seconds. In addition, according to the method of the present embodiment, the accuracy of the dye image can be maintained by performing unmixing by using the statistical value.

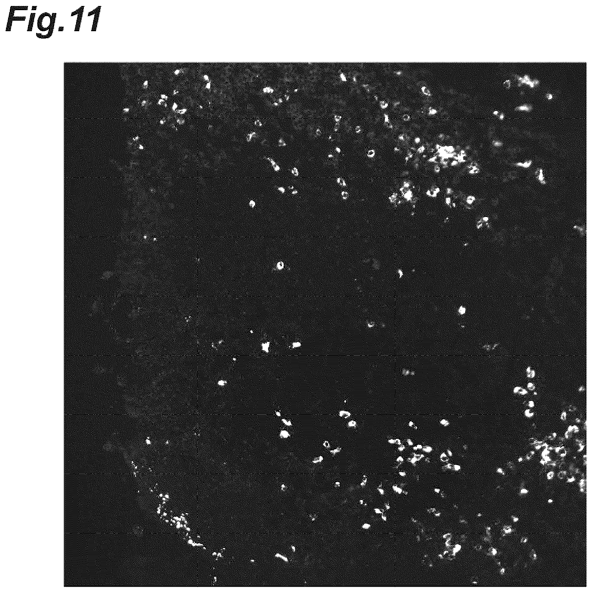

FIG. 11 illustrates an example of a dye image generated by the dye image acquisition system 1 according to the present embodiment. As described above, according to the present embodiment, the distribution of rhodamine, which is a dye contained in the sample S, can be obtained with a high accuracy. It has been found that a fluorescence image with equivalent accuracy can be obtained as compared with a fluorescence imaging method using a conventional band pass filter.

Although various embodiments of the present invention have been described above, the present invention is not limited to the above embodiments, and may be modified or applied to other objects without changing the gist described in each claim.

For example, in the image processing device 5 of the present embodiment, the number L of pixel groups to be clustered and the number K of dye images are set in advance as parameters according to the number of dyes included in the sample S. However, the image processing device 5 may sequentially change the parameters L and K to repeat generation of the dye image. For example, unmixing may be executed with the number of clusters L = C - 1 and the number of dyes K = C - 1 to generate a dye image, and when the accuracy of the obtained dye image for each dye is poor, the number of clusters L and the number of dyes K may be sequentially changed to C - 2, C - 3, ... to repeat the unmixing.

Further, the dye image acquisition system 1 of the present embodiment may generate a dye image by executing unmixing by using the C sets of separated fluorescence images obtained by the first camera 15a and the second camera 15b as they are. In this case, the number of fluorescence images to be unmixed is 2 × C. Further, the dye image acquisition system 1 may switch and use M band pass filters that transmit one fluorescence band as the camera-side filter set 9b, and execute unmixing on M × C fluorescence images obtained as a result.

In addition, the dye image acquisition system 1 may include a plurality of excitation light sources 7 that simultaneously irradiate the sample S with the excitation light beams of the plurality of wavelength bands, and may acquire C fluorescence images while changing the intensity ratio between the excitation light beams of the plurality of wavelength bands and irradiating the sample S with the excitation light beams of C types of wavelength distributions. Also in this case, a dye image for each of a plurality of dyes can be obtained with a high accuracy.

When generating the matrix data Y before being clustered, the image processing device 5 according to the present embodiment may generate the matrix data Y as data in which N pixels configuring an image are arranged in a row direction according to a prescribed rule, or may generate the matrix data Y as data in which the pixels are arranged in the row direction according to a random rule. However, the data of the fluorescence image of the C rows configuring one piece of matrix data Y is set as data in which N pixels are arranged according to the same rule. Even when the matrix data Y generated by random arrangement is used, the same matrix data Y' can be regenerated by clustering.

Furthermore, when generating the matrix data Y before being clustered, the image processing device 5 according to the present embodiment may generate the matrix data Y by excluding background pixels (pixels having no dye) included in the fluorescence image.

As a method of clustering the pixel groups in the image processing device 5, a method using machine learning such as a K-means method, a method using deep learning, or the like may be adopted.

In addition to the K-means method, a method using machine learning such as a decision tree, a support vector machine, a K nearest neighbor (KNN), a self-organizing map, spectral clustering, a Gaussian mixture model, DBSCAN, Affinity Propagation, MeanShift, Ward, Agglomerative Clustering, OPTICS, and BIRCH, a method using deep learning, or the like may be adopted as the method of clustering pixel groups in the image processing device 5. In addition, pre-processing may be performed on the matrix data Y before clustering is applied. For example, the dimension of C-dimensional data of each pixel may be reduced by Phasor Analysis, principal component analysis, singular value decomposition, independent component analysis, linear discriminant analysis, t-SNE, UMAP, other machine learning, or the like.

The image acquisition device 3 of the present embodiment may adopt, as the wavelength information acquisition optical system 13, a single band dichroic mirror that transmits one wavelength band or a multiband dichroic mirror that transmits a plurality of wavelength bands, in addition to the inclined dichroic mirror having a wavelength characteristic in which transmittance linearly changes with respect to the wavelength as described above. At this time, the above-described multiband pass filter may be adopted as the camera-side filter set 9b, or a single band pass filter that transmits one wavelength band may be adopted.

Here, in a case where the single band pass filter is adopted as the camera-side filter set 9b, and the inclined dichroic mirror having a characteristic of a transmittance characteristic $t(\lambda) = a_1\lambda + bi$ with respect to a wavelength $\lambda$ is adopted as the wavelength information acquisition optical system 13, the wavelength information acquisition unit 202 of the image processing device 5 calculates wavelength information WLC indicating a centroid fluorescence wavelength by using the following formula.

[Mathematical formula 3]

$$WLC = \frac{\left\{\frac{x_1-x_2}{x_1+x_2}-(2b_1-1)\right\}}{2a_1}$$

Here, $x_1$ is a fluorescence intensity of one separated fluorescence image, and $x_2$ is a fluorescence intensity of the other separated fluorescence image. On the other hand, in a case where the single band pass filter is adopted as the camera-side filter set 9b and a single band dichroic mirror or a multiband dichroic mirror is adopted as the wavelength information acquisition optical system 13, the wavelength information acquisition unit 202 of the image processing device 5 calculates wavelength information $WL_{ratio}$ by using the following formula;

$$WL_{ratio} = x_2/x_1.$$

Furthermore, the wavelength information acquisition optical system 13 is not limited to the dichroic mirror, and a filter set having similar wavelength characteristics may be used, or a beam splitter (polarization beam splitter or the like) that divides fluorescence may be used. In addition, a set of separated fluorescence images may be obtained by performing imaging a plurality of times by using one camera by switching and using filters having different wavelength characteristics. In addition, fluorescence of two components separated by the wavelength information acquisition optical system 13 may be imaged by dividing a visual field by one camera.

In addition, the wavelength information acquisition unit 202 of the image acquisition device 3 of the present embodiment may perform processing using a fluorescence image acquired by using a camera capable of detecting at least two or more fluorescence wavelengths in order to acquire wavelength information related to the fluorescence wavelength. Examples of such a camera include a color sensor (color camera), a multiband sensor (multiband camera), and the like. For example, in a case where a color sensor is used, the wavelength information acquisition unit 202 can calculate and acquire information related to a fluorescence wavelength by comparing three intensity values of an R pixel, a G pixel, and a B pixel obtained from the color sensor. Furthermore, in the case of a multiband sensor, the wavelength information acquisition unit 202 can also calculate and acquire information related to a fluorescence wavelength by comparing intensity values for different wavelengths obtained from the multiband sensor. Also in this case, since the wavelength information is acquired based on the fluorescence image obtained by imaging the fluorescence, the wavelength information can be analyzed with a high accuracy. As a result, the accuracy of separation of the dye image can be improved.

In the dye image acquisition method of the present disclosure, in the clustering step, it is preferable to cluster N pixels based on the distribution information of the intensity values for each of the C excitation light beams. In the dye image acquisition device of the present disclosure, the image processing device preferably clusters the N pixels based on the distribution information of the intensity values for each of the C excitation light beams. As a result, the pixels can be clustered according to the fluorescence intensities for each of the excitation light beams, and by performing unmixing based on the clustering result, the accuracy of separation of the dye image can be improved.

Furthermore, the dye image acquisition method of the present disclosure preferably further includes a wavelength information acquisition step of acquiring wavelength information related to a fluorescence wavelength corresponding to each pixel of the fluorescence image, and in the clustering step, N pixels are clustered based on the wavelength information corresponding to each pixel. Furthermore, in the dye image acquisition device of the present disclosure, it is also preferable that the image processing device further acquires wavelength information related to a fluorescence wavelength corresponding to each pixel of the fluorescence image, and clusters the N pixels based on the wavelength information corresponding to each pixel. As a result, the pixels can be clustered by using the wavelength information corresponding to each pixel of the fluorescence image, and by performing unmixing based on the clustering result, the accuracy of separation of the dye image can be improved.

Further, in the dye image acquisition method of the present disclosure, in the wavelength information acquisition step, it is also preferable that the sample is irradiated with excitation light of any wavelength distribution of the C wavelength distributions, fluorescence from the sample is separated via a wavelength information acquisition optical system that separates fluorescence with different wavelength characteristics, each of the separated fluorescence is captured to acquire a plurality of separated fluorescence images, and wavelength information is acquired based on the plurality of separated fluorescence images. Furthermore, in the dye image acquisition device of the present disclosure, it is also preferable that the image acquisition device irradiates the sample with the excitation light of any wavelength distribution of the C wavelength distributions, separates the fluorescence from the sample via the wavelength information acquisition optical system that separates the fluorescence with different wavelength characteristics, and respectively images the separated fluorescence to acquire a plurality of separated fluorescence images, and the image processing device acquires wavelength information based on the plurality of separated fluorescence images. In this case, the fluorescence from the sample generated by the irradiation of the excitation light is separated with different wavelength characteristics, and the wavelength information is acquired based on the plurality of separated fluorescence images obtained by imaging the separated fluorescence, so that the wavelength information can be analyzed with a high accuracy. As a result, the accuracy of separation of the dye image can be improved.

Further, in the dye image acquisition method of the present disclosure, in the wavelength information acquisition step, it is preferable that the sample is irradiated with excitation light of any wavelength distribution of C wavelength distributions, fluorescence from the sample is captured with a camera capable of detecting at least two or more fluorescence wavelengths to acquire a fluorescence image, and wavelength information is acquired based on the fluorescence image. In addition, in the dye image acquisition device of the present disclosure, it is preferable that the image acquisition device irradiates the sample with excitation light of any wavelength distribution of C wavelength distributions, images fluorescence from the sample with a camera capable of detecting at least two or more fluorescence wavelengths to acquire a fluorescence image, and acquires wavelength information based on the fluorescence image. Also in this case, since the wavelength information is acquired based on the fluorescence image obtained by imaging the fluorescence from the sample generated by the irradiation of the excitation light, the wavelength information can be analyzed with a high accuracy. As a result, the accuracy of separation of the dye image can be improved.

Furthermore, in the dye image acquisition method of the present disclosure, in the calculation step, it is also preferable that the statistical value is calculated based on an integrated value, a mode, or an intermediate value of the intensity values of the pixel groups. Furthermore, in the dye image acquisition device of the present disclosure, it is also preferable that the image processing device calculates the statistical value based on the integrated value, the mode, or the intermediate value of the intensity values of the pixel groups. In this case, unmixing can be executed based on the overall tendency of the intensity values of the L pixel groups of the clustered fluorescence image, and the accuracy of the generated dye image can be improved.

In the dye image acquisition method or the dye image acquisition device of the present disclosure, the calculation may be performed after an outlier or some pixels are excluded before the statistical value is calculated. Furthermore, each pixel may be redundantly included in different clusters. In that case, it is used for statistical value calculation in each cluster.

Furthermore, in the dye image acquisition method of the present disclosure, in the image generation step, it is also preferable that a mixing matrix is obtained by using the statistical values of the C fluorescence images for each of the L cluster matrices, and unmixing is performed by using the mixing matrix. Furthermore, in the dye image acquisition device of the present disclosure, it is also preferable that the image processing device obtains a mixing matrix by using the statistical values of the C fluorescence images for each of the L cluster matrices, and performs unmixing using the mixing matrix. In this way, the mixing matrix is obtained based on the statistical values of the L pixel groups of the clustered fluorescence image, the unmixing can be executed by using the mixing matrix, and the accuracy of the generated dye image can be improved.

Furthermore, in the dye image acquisition method of the present disclosure, in the image generation step, it is also preferable that loss values are calculated based on the statistical values of the C fluorescence images for each of the L cluster matrices by using nonnegative matrix factorization, and the mixing matrix is obtained based on the sum of the loss values. Furthermore, in the dye image acquisition device of the present disclosure, it is also preferable that the image processing device calculates the loss values based on the statistical values of the C fluorescence images for each of the L cluster matrices by using nonnegative matrix factorization, and obtains a mixing matrix based on the sum of the loss values. In this way, the loss values are calculated based on the statistical values of the L pixel groups of the clustered fluorescence image, the mixing matrix is obtained based on the sum of the loss values, and the unmixing can be executed by using the mixing matrix. As a result, even when there is a difference in the size of the distribution region of each dye in the fluorescence image of the sample, the accuracy of the generated dye image can be improved.

Furthermore, in the dye image acquisition method of the present disclosure, in the image generation step, it is also preferable that the loss values are corrected based on the statistical values for each of the L cluster matrices, and the mixing matrix is obtained based on the sum of the corrected loss values. Furthermore, in the dye image acquisition device of the present disclosure, it is also preferable that the image processing device corrects the loss values for each of the L cluster matrices based on the statistical values, and obtains the mixing matrix based on the sum of the corrected loss values. According to such a configuration, the loss values are calculated based on the statistical values of the L pixel groups of the clustered fluorescence image, and respective loss values are corrected based on the statistical values when the sum of the loss values is obtained. As a result, even when there is a difference in the fluorescence intensity of each dye in the fluorescence image of the sample, the dye image can be generated with a high accuracy.

**Reference Signs List**

| | |
|---|---|
| 1 | Dye image acquisition system |
| 3 | Image acquisition device |
| 5 | Image processing device |
| 7 | Excitation light source |
| 9a | Light source-side filter set |
| 9b | Camera-side filter set |
| 11 | Dichroic mirror |
| 15a, 15b | Camera |
| 13 | Wavelength information acquisition optical system |
| 201 | Image acquisition unit |
| 202 | Wavelength information acquisition unit |
| 203 | Clustering unit |
| 204 | Statistical value calculation unit |
| 205 | Image generation unit |
| $C_1$, $C_2$, $C_3$ | Dye |
| $GC_1$ to $GC_6$ | Fluorescence image |
| $PGr_{01}$ to $PGr_{03}$, $PGr_1$ to $PGr_6$ | Pixel group |
| S | Sample |

**Claims**

1.  A dye image acquisition method comprising:

    an image acquisition step of irradiating a sample with each of excitation light beams having C (C is an integer of 2 or more) wavelength distributions and acquiring the C fluorescence images each including N (N is an integer of 2 or more) pixels;

a clustering step of clustering the N pixels into L (L is an integer of 2 or more and N-1 or less) pixel groups based on intensity values of respective pixels of the C fluorescence images, and generating L cluster matrices in which the C fluorescence images are arranged for each of the clustered pixel groups;
a calculation step of calculating statistical values of the intensity values of the pixel groups configuring the C fluorescence images for each of the L cluster matrices; and
an image generation step of performing unmixing on the C fluorescence images by using the statistical values of the C fluorescence images for each of the L cluster matrices, and generating K (K is an integer of 2 or more and C or less) dye images indicating a distribution for each K dyes.

2. The dye image acquisition method according to claim 1, wherein
in the clustering step, the N pixels are clustered based on distribution information of the intensity values for each of the C excitation light beams.

3. The dye image acquisition method according to claim 1 or 2, further comprising:

a wavelength information acquisition step of acquiring wavelength information related to a fluorescence wavelength corresponding to each pixel of the fluorescence image, wherein
in the clustering step, the N pixels are clustered based on the wavelength information corresponding to each pixel.

4. The dye image acquisition method according to claim 3, wherein
in the wavelength information acquisition step, the sample is irradiated with excitation light of any wavelength distribution of the C wavelength distributions, fluorescence from the sample is separated via a wavelength information acquisition optical system that separates fluorescence with different wavelength characteristics, the separated fluorescence is respectively imaged to acquire a plurality of separated fluorescence images, and the wavelength information is acquired based on the plurality of separated fluorescence images.

5. The dye image acquisition method according to claim 3, wherein
in the wavelength information acquisition step, the sample is irradiated with excitation light of any wavelength distribution of the C wavelength distributions, fluorescence from the sample is imaged with a camera capable of detecting at least two or more fluorescence wavelengths to acquire a fluorescence image, and the wavelength information is acquired based on the fluorescence image.

6. The dye image acquisition method according to any one of claims 1 to 5, wherein
in the calculation step, the statistical values are calculated based on an integrated value, a mode, or an intermediate value of the intensity values of the pixel groups.

7. The dye image acquisition method according to any one of claims 1 to 6, wherein
in the image generation step, a mixing matrix is obtained by using the statistical values of the C fluorescence images for each of L cluster matrices, and unmixing is performed by using the mixing matrix.

8. The dye image acquisition method according to claim 7, wherein
in the image generation step, loss values are calculated based on the statistical values of the C fluorescence images for each of the L cluster matrices by using nonnegative matrix factorization, and the mixing matrix is obtained based on a sum of the loss values.

9. The dye image acquisition method according to claim 8, wherein
in the image generation step, the loss values are corrected based on the statistical values for each of the L cluster matrices, and the mixing matrix is obtained based on a sum of the corrected loss values.

10. A dye image acquisition device comprising:

an image acquisition device configured to irradiate a sample with each of excitation light beams having C (C is an integer of 2 or more) wavelength distributions and acquire the C fluorescence images each including N (N is an integer of 2 or more) pixels; and
an image processing device configured to generate a dye image indicating a distribution of dyes in the sample, wherein
the image processing device
clusters the N pixels into L (L is an integer of 2 or more and N-1 or less) pixel groups based on intensity values of respective pixels of the C fluorescence images, and generates L cluster matrices in which the C fluorescence images are arranged for each of the clustered pixel groups,
calculates statistical values of the intensity values of the pixel groups configuring the C fluorescence images for each of the L cluster matrices, and
performs unmixing on the C fluorescence images by using the statistical values of the C fluorescence images for each of the L cluster matrices, and generates K (K is an integer of 2 or more and C or less) dye images indicating a distribution for each K dyes.

11. The dye image acquisition device according to claim 10, wherein
the image processing device clusters the N pixels based on distribution information of the intensity values for each of the C excitation light beams.

12. The dye image acquisition device according to claim 10 or 11, wherein

the image processing device
further acquires wavelength information related to a fluorescence wavelength corresponding to each pixel of the fluorescence image, and
clusters the N pixels based on the wavelength information corresponding to each pixel.

13. The dye image acquisition device according to claim 12, wherein

the image acquisition device
irradiates the sample with excitation light of any wavelength distribution of the C wavelength distributions, separates fluorescence from the sample via a wavelength information acquisition optical system that separates fluorescence with different wavelength characteristics, and respectively images the separated fluorescence to acquire a plurality of separated fluorescence images, and
the image processing device acquires the wavelength information based on the plurality of separated fluorescence images.

14. The dye image acquisition device according to claim 12, wherein
the image acquisition device irradiates the sample with excitation light of any wavelength distribution of the C wavelength distributions, images fluorescence from the sample with a camera capable of detecting at least two or more fluorescence wavelengths to acquire a fluorescence image, and acquires the wavelength information based on the fluorescence image.

15. The dye image acquisition device according to any one of claims 10 to 14, wherein
the image processing device calculates the statistical values based on an integrated value, a mode, or an intermediate value of the intensity values of the pixel groups.

16. The dye image acquisition device according to any one of claims 10 to 15, wherein
the image processing device obtains a mixing matrix by using the statistical values of the C fluorescence images for each of L cluster matrices, and performs unmixing by using the mixing matrix.

17. The dye image acquisition device according to claim 16, wherein
the image processing device calculates loss values based on the statistical values of the C fluorescence images for each of L cluster matrices by using nonnegative matrix factorization, and obtains the mixing matrix based on a sum of the loss values.

18. The dye image acquisition device according to claim 17, wherein
the image processing device corrects the loss values based on the statistical values for each of the L cluster matrices, and obtains the mixing matrix based on a sum of the corrected loss values.

19. A dye image acquisition program for generating a dye image indicating a distribution of dyes in a sample based on C (C is an integer of 2 or more) fluorescence images acquired by irradiating the sample with each of excitation light beams having C wavelength distributions, the C fluorescence images each including N (N is an integer of 2 or more) pixels, the program for causing a computer to function as:

a clustering unit configured to cluster the N pixels into L (L is an integer of 2 or more and N-1 or less) pixel groups based on intensity values of respective pixels of the C fluorescence images, and generate L cluster matrices in which the C fluorescence images are arranged for each of the clustered pixel groups;

a calculation unit configured to calculate statistical values of the intensity values of the pixel groups configuring the C fluorescence images for each of the L cluster matrices; and

an image generation unit configured to perform unmixing on the C fluorescence images by using the statistical values of the C fluorescence images for each of the L cluster matrices, and generate K (K is an integer of 2 or more and C or less) dye images indicating a distribution for each K dyes.

*Fig.1*

# Fig.2

*Fig.3*

5

101

CPU

104

COMMUNICATION
MODULE

102

RAM

106

INPUT/OUTPUT
MODULE

103

ROM

## Fig.4

5

```
┌──────────────────────────────────────────────────┐
│                                                    │
│   ┌──────────────────────────────────────┐         │
│──►│        IMAGE ACQUISITION UNIT         │╌╌╌╌ 201 │
│   └──────────────────────────────────────┘         │
│                     │                              │
│                     ▼                              │
│   ┌──────────────────────────────────────┐         │
│   │     WAVELENGTH INFORMATION            │╌╌╌╌ 202 │
│   │        ACQUISITION UNIT               │         │
│   └──────────────────────────────────────┘         │
│                     │                              │
│                     ▼                              │
│   ┌──────────────────────────────────────┐         │
│   │          CLUSTERING UNIT              │╌╌╌╌ 203 │
│   └──────────────────────────────────────┘         │
│                     │                              │
│                     ▼                              │
│   ┌──────────────────────────────────────┐         │
│   │        STATISTICAL VALUE             │╌╌╌╌ 204 │
│   │       CALCULATION UNIT               │         │
│   └──────────────────────────────────────┘         │
│                     │              ╌╌╌╌ 205        │
│                     ▼                              │
│   ┌──────────────────────────────────────┐         │
│   │        IMAGE GENERATION UNIT          │──────►  │
│   └──────────────────────────────────────┘         │
│                                                    │
│            IMAGE PROCESSING DEVICE                 │
└──────────────────────────────────────────────────┘
```

*Fig.5*

EP 4 379 359 A1

**Fig.6**

22

**Fig.7**

# Fig.8

# Fig.9

# Fig.10

START

ACQUIRE FLUORESCENCE IMAGE OF SAMPLE S AND SEPARATED FLUORESCENCE IMAGE — S1

GENERATE MATRIX DATA Y — S2

EXECUTE FIRST CLUSTERING FUNCTION — S3

ACQUIRE WAVELENGTH INFORMATION FOR EACH OF C PIXEL GROUPS — S4

EXECUTE SECOND CLUSTERING FUNCTION — S5

CALCULATE STATISTICAL VALUES OF L PIXEL GROUPS AND REGENERATE MATRIX DATA Y' — S6

DERIVE MIXING MATRIX A BASED ON MATRIX DATA Y' — S7

UNMIX C FLUORESCENCE IMAGES TO BE OBSERVED AND REGENERATE K DYE IMAGES — S8

OUTPUT K DYE IMAGES — S9

END

Fig.11

## INTERNATIONAL SEARCH REPORT

| International application No. |
| --- |
| **PCT/JP2022/028660** |

| **A.** | **CLASSIFICATION OF SUBJECT MATTER** |
| --- | --- |

*G01N 21/64*(2006.01)i; *G01N 21/27*(2006.01)i; *G06T 7/00*(2017.01)i
FI: G01N21/64 Z; G01N21/27 A; G06T7/00 630

According to International Patent Classification (IPC) or to both national classification and IPC

| **B.** | **FIELDS SEARCHED** |
| --- | --- |

Minimum documentation searched (classification system followed by classification symbols)

G01N21/00-G01N21/958, G06T7/00-G06T7/90, G06T1/00-G06T1/60, G06K9/00-G06K9/62, G01J3/00-G01J3/52

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580/JSTChina (JDreamIII), IEEE Xplore, SPIE Digital Library, KAKEN

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | Robust blind spectral unmixing for fluorescence microscopy using unsupervised learning. PLOS ONE. 02 December 2019, vol. 14, no. 12, e0225410, doi: 10.1371/journal.pone.0225410<br>fig. 1-7 | 1-19 |
| A | JP 2021-512406 A (NEC CORPORATION) 13 May 2021 (2021-05-13) | 1-19 |
| A | JP 2021-036224 A (SONY CORP) 04 March 2021 (2021-03-04) | 1-19 |
| A | JP 2021-081342 A (SONY CORP) 27 May 2021 (2021-05-27) | 1-19 |
| A | JP 2020-020791 A (SONY CORP) 06 February 2020 (2020-02-06) | 1-19 |
| A | JP 2018-185453 A (OLYMPUS CORP) 22 November 2018 (2018-11-22) | 1-19 |
| A | JP 2010-243970 A (NIKON CORP) 28 October 2010 (2010-10-28) | 1-19 |
| A | JP 2013-213756 A (INSTITUTE OF PHYSICAL & CHEMICAL RESEARCH) 17 October 2013 (2013-10-17) | 1-19 |

| ☑ Further documents are listed in the continuation of Box C. | ☑ See patent family annex. |
| --- | --- |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **30 August 2022** | **13 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/028660**

## C. DOCUMENTS CONSIDERED TO BE RELEVANT

| Category* | Citation of document, with indication, where appropriate, of the relevant passages | Relevant to claim No. |
|---|---|---|
| A | US 8660360 B1 (RAYTHEON COMPANY) 25 February 2014 (2014-02-25) | 1-19 |
| A | JP 2017-502286 A (VENTANA MEDICAL SYSTEMS, INC.) 19 January 2017 (2017-01-19) | 1-19 |
| A | CN 110992273 A (XIAN INST OPTICS & PREC MECHANICS CAS) 10 April 2020 (2020-04-10) | 1-19 |
| A | CN 113221992 A (UNIV XI AN JIAOTONG) 06 August 2021 (2021-08-06) | 1-19 |
| A | Introduction to Spectral Imaging and Linear Unmixing. Education in Microscopy and Digital Imaging (online). ZEISS. 27 April 2021, <URL: https://zeiss-campus.magnet.fsu.edu/articles/ spectralimaging/introduction.html>, web archive acquisition date: 27 April 2021, [retrieval date: 30 August 2022]<br>    fig. 1-7 | 1-19 |
| A | LUMoS Spectral Unmixing. ImageJ. June 2019, <URL: https://imagej.net/imagej-wiki-static/ LUMoS_Spectral_Unmixing>, publication of the first edition: June 2019, [retrieval date 30: August 2022]<br>    "SPECTRAL OVERLAP" | 1-19 |

Form PCT/ISA/210 (second sheet) (January 2015)

INTERNATIONAL SEARCH REPORT
Information on patent family members

International application No.

**PCT/JP2022/028660**

| Patent document cited in search report | | | Publication date (day/month/year) | Patent family member(s) | | | Publication date (day/month/year) |
|---|---|---|---|---|---|---|---|
| JP | 2021-512406 | A | 13 May 2021 | US | 2020/0364835 | A1 | |
| | | | | WO | 2019/150453 | A1 | |
| JP | 2021-036224 | A | 04 March 2021 | WO | 2021/039158 | A1 | |
| JP | 2021-081342 | A | 27 May 2021 | WO | 2021/100622 | A1 | |
| JP | 2020-020791 | A | 06 February 2020 | US | 2021/0318241 | A1 | |
| | | | | WO | 2020/022394 | A1 | |
| | | | | EP | 3827248 | A1 | |
| | | | | CN | 112424588 | A | |
| JP | 2018-185453 | A | 22 November 2018 | US | 2018/0314049 | A1 | |
| JP | 2010-243970 | A | 28 October 2010 | (Family: none) | | | |
| JP | 2013-213756 | A | 17 October 2013 | (Family: none) | | | |
| US | 8660360 | B1 | 25 February 2014 | WO | 2014/021996 | A1 | |
| | | | | EP | 2880596 | A1 | |
| JP | 2017-502286 | A | 19 January 2017 | US | 2017/0053397 | A1 | |
| | | | | WO | 2015/101507 | A1 | |
| | | | | EP | 3090381 | A1 | |
| | | | | AU | 2014375318 | A1 | |
| | | | | CA | 2931216 | A1 | |
| CN | 110992273 | A | 10 April 2020 | (Family: none) | | | |
| CN | 113221992 | A | 06 August 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BINJIE QIN et al.** Target/Background Classification Regularized Nonnegative Matrix Factorization for Fluorescence Unmixing. *IEEE TRANSACTIONS ON INSTRUMENTATION AND MEASUREMENT,* April 2016, vol. 65 (4

- **TRISTAN D. MCRAE et al.** Robust blind spectral unmixing for fluorescence microscopy using unsupervised learning. *PLOS ONE,* 02 December 2019